# EUROPEAN PATENT APPLICATION

(11) **EP 4 697 778 A1**
(43) Date of publication of application: **18.02.2026**
(21) Application number: 24806172.3
(22) Date of filing: 15.03.2024
(51) Int. Cl.: H04W 16/22

(54) **COMMUNICATION METHOD AND APPARATUS**

(30) Priority: 12.05.2023 CN 202310539530
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); CHEN, Jun, Shenzhen, Guangdong 518129 (CN)
(74) Representative: Epping - Hermann - Fischer
(86) International application number: PCT/CN2024/081854
(87) International publication number: WO 2024/234812

(57) **Abstract**

Embodiments of this application provide a communication method and apparatus. The method is applied to registration of an AI model. The method includes: a first network device obtains a first model through training; and the first network device sends first request information to request to register the first model with a second network device, where the first request information includes a first identifier corresponding to the first model. The first model is registered, so that devices in an application scenario of the first model can have a unified understanding of the first model, to improve application effect of the first model.

## Description

This application claims priority to Chinese Patent Application No. 202310539530.2, filed with the China National Intellectual Property Administration on May 12, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With improvement of data storage and computing capabilities, an artificial intelligence (artificial intelligence, AI) technology is increasingly used. The AI technology can be used in communication systems such as a new radio (new radio, NR) system, to improve network performance and user experience through intelligent data collection and analysis.

The 3rd generation partnership project (3rd generation partnership project, 3GPP) introduces a plurality of AI application scenarios. In some AI application scenarios, terminal devices implement all or some AI functions. Therefore, in a possible AI model transmission manner, an access network device trains an AI model and transmits the AI model to a terminal device. However, because the AI model is trained by the access network device, devices in an application scenario of a first model, for example, a network management network element, the terminal device, and the access network device, do not have a unified understanding of the AI model. As a result, use effect of the AI model in the AI application scenario is affected.

### SUMMARY

This application provides a communication method and apparatus, to register an AI model. According to a first aspect, a communication method is provided, and is applied to a first network device. The method may be performed by the first network device, or may be performed by a component (for example, a chip or a circuit) of the first network device. This is not limited. For ease of description, an example in which the method is performed by the first network device is used below for description.

The method may include: obtaining a first model through training; and sending first request information, where the first request information is used to request to register the first model, the first request information includes a first identifier, and the first identifier corresponds to the first model.

For example, the first network device in this application may be an access network device, and the first model may include an AI model.

It should be understood that in this application, obtaining the first model and sending the first request information are not subject to a sequence. The first network device may send the first request information after obtaining the first model through training, or may send the first request information after determining a training requirement of the first model and before completing model training. This is not limited in this application.

In the foregoing technical solution, the first model is registered, and the first identifier corresponds to the first model, so that devices in an application scenario of the first model, for example, devices such as a terminal device, an access network device, and a network management network element that are within coverage of a same operator, can have a unified understanding of the first model, including that after registration is completed, each device may invoke the first model by using the first identifier. Further, when moving to coverage of another access network device, the terminal device may still invoke the first model by using the first identifier, to facilitate subsequent detection and management of the first model. This improves application effect of the first model.

With reference to the first aspect, in some implementations of the first aspect, the method further includes: obtaining first information, where the first information includes at least one model identifier, and the at least one model identifier is a model identifier registerable by the first network device; and allocating the first identifier to the first model based on the first information.

Based on the foregoing solution, the first network device may select one of model identifiers in the first information as the identifier of the first model, so that the first network device can more flexibly allocate the identifier to the first model.

With reference to the first aspect, in some implementations of the first aspect, obtaining the first information includes: receiving the first information from a second network device; or the first information is preconfigured in the first network device.

For example, that the first information is preconfigured in the first network device may include that the first information is preconfigured in factory settings of the first network device.

With reference to the first aspect, in some implementations of the first aspect, obtaining the first information includes: the first network device generates the first information.

For example, the first network device may generate the first information based on the training requirement of the first model.

With reference to the first aspect, in some implementations of the first aspect, the first information further includes at least one of the following: auxiliary information of a model corresponding to the at least one model identifier, information about a cell capable of using a model corresponding to the at least one model identifier, information about a valid time of a model corresponding to the at least one model identifier, or information about a terminal device capable of using a model corresponding to the at least one model identifier.

The auxiliary information of the model may include at least one of the following: input information of the model, output information of the model, a version number corresponding to the model, a format of the model, a requirement of the model on a terminal device capability, an identifier of a device vendor to which the model can be applied, a scenario in which the model can be used, a use case (use case) of the model, complexity of model calculation, a model processing capability requirement, a model data volume range, accuracy of the model, or a model function.

Based on the foregoing solution, related information about the model corresponding to the model identifier is added to the first information, so that the first network device can more accurately and quickly determine the identifier allocated to the first model.

With reference to the first aspect, in some implementations of the first aspect, the first request information further includes at least one of the following: auxiliary information of the first model, a list of terminal devices capable of using the first model, a list of cells capable of using the first model, a list of public land mobile networks capable of using the first model, a predicted time for using the first model, an index for indicating the first model, or a mapping relationship for mapping the first model.

For the auxiliary information, refer to the foregoing description about the auxiliary information of the model. It should be understood that the auxiliary information of the first model and the auxiliary information of the model corresponding to the at least one model identifier may be completely the same or may not be completely the same. This is not limited in this application. Based on the foregoing solution, related information about the first model is added to the first request information, so that the first model can be described more comprehensively. This helps improve efficiency and accuracy of registering the first model. In addition, the first request information includes the index for indicating the first model and/or the mapping relationship for mapping the first model, so that a complete model identifier is not sent when the first network device and the second network device subsequently indicate the model. This reduces signaling overheads.

With reference to the first aspect, in some implementations of the first aspect, sending the first request information includes: sending indication information to a terminal device, where the indication information includes the first request information, to indicate the terminal device to forward the first request information to the second network device.

Further, the method may further include: receiving a registration result of the first model from the terminal device, where the registration result of the first model is sent by the second network device to the terminal device.

Specifically, the registration result of the first model may be explicitly or implicitly indicated by the second network device to the terminal device.

For example, the second network device sends feedback information to the terminal device, where the feedback information includes information indicating that the registration succeeds or the registration fails.

For example, the terminal device starts a timer after sending the first request information to the second network device. If no feedback from the second network device is received within a specific time, it indicates that the registration succeeds.

For example, the second network device may further indicate the terminal device to forward the registration result of the first model to the first network device.

With reference to the first aspect, in some implementations of the first aspect, sending the first request information includes: sending the first request information to the second network device. With reference to the first aspect, in some implementations of the first aspect, the method may further include: receiving a registration result of the first model from the second network device. The registration result of the first model may be explicitly or implicitly indicated by the second network device to the first network device. For a manner of sending the registration result of the first model, refer to the foregoing manner in which the second network device sends the registration result of the first model to the terminal device. Details are not described herein again. It should be understood that if the first request information is forwarded by the terminal device to the second network device, the second network device may directly feed back the registration result of the first model to the first network device. In this case, when sending the first request information, the terminal device may indicate the first network device to the second network device. For example, when sending the first request information, the terminal device further sends an identifier of the first network device.

With reference to the first aspect, in some implementations of the first aspect, if the registration result is that the registration succeeds, the method further includes: sending second information to the terminal device, where the second information includes the first model.

With reference to the first aspect, in some implementations of the first aspect, the second information further includes at least one of the following: the first identifier, indication information indicating that the first model has been registered, the auxiliary information of the first model, an index corresponding to the first identifier, an index corresponding to the first identifier and an applicable cell range, a mapping rule corresponding to the first identifier, or a mapping rule corresponding to the first identifier and an applicable cell range.

The first identifier may be indicated by using an index or a mapping relationship, to indicate the first model, so that a complete first identifier does not need to be sent when the terminal device and the first network device subsequently indicate the first model. This reduces signaling overheads.

With reference to the first aspect, in some implementations of the first aspect, if the registration result is that the registration fails, the method further includes: sending second request information based on a modified training requirement of the first model.

With reference to the first aspect, in some implementations of the first aspect, the first network device includes a central unit and a distributed unit, and the method further includes: the central unit allocates a model identifier to the distributed unit based on a model identifier that has been allocated to the distributed unit and/or information about a requirement of the distributed unit for a model identifier, and sends the model identifier to the distributed unit.

Based on the foregoing solution, in a spilt architecture, the central unit and the distributed unit interact with each other on a requirement of a pre-allocated model identifier, and the central unit collects a requirement of each distributed unit, to ensure a model identifier allocation requirement of the entire first network device. For example, it can be ensured that the distributed unit obtains sufficient model identifiers, one model is not corresponding to a plurality of model identifiers, and a plurality of distributed units do not require a same model identifier.

For example, if a quantity of model identifiers required by the distributed unit exceeds a quantity of model identifiers pre-allocated to the distributed unit, the central unit may allocate, to the distributed unit, a model identifier that can be released by another distributed unit or the central unit.

For example, if a plurality of distributed units require a same model identifier, the central unit may allocate the model identifier to one of the distributed units, and indicate to the other distributed unit that the model identifier has been allocated.

For example, if the distributed unit requires different model identifiers for a same model, the central unit may unify the model identifiers of the model.

With reference to the first aspect, in some implementations of the first aspect, the first request information further includes: a unit identifier, where the unit identifier is used to identify the central unit or the distributed unit for training the first model.

Based on the foregoing solution, the central unit or the distributed unit for training the first model may be determined by using the unit identifier, so that the registration result is more reliable.

With reference to the first aspect, in some implementations of the first aspect, the first network device includes a central unit and a distributed unit, and the method further includes: if the first model is a model trained by the central unit, the central unit sends the second information to the terminal device through the distributed unit; or if the first model is a model trained by the distributed unit, the distributed unit sends the second information to the terminal device; or the distributed unit sends the first model to the central unit, and the central unit sends the second information to the terminal device through the distributed unit.

According to a second aspect, a communication method is provided, and is applied to a terminal device. The method may be performed by the terminal device, or may be performed by a component (for example, a chip or a circuit) of the terminal device. This is not limited. For ease of description, an example in which the method is performed by the terminal device is used below for description.

The method may include: receiving indication information from a first network device, where the indication information includes first request information, the indication information indicates the terminal device to forward the first request information to a second network device, the first request information is used to request to register a first model, the first request information includes a first identifier, the first identifier corresponds to the first model, and the first model is a model trained by the first network device; and forwarding the first request information to the second network device.

With reference to the second aspect, in some implementations of the second aspect, the method further includes: receiving a registration result of the first model from the second network device and forwarding the registration result to the first network device.

With reference to the second aspect, in some implementations of the second aspect, the first request information further includes at least one of the following: auxiliary information of the first model, a list of terminal devices capable of using the first model, a list of cells capable of using the first model, a list of public land mobile networks capable of using the first model, a predicted time for using the first model, an index for indicating the first model, or a mapping relationship for mapping the first model.

With reference to the second aspect, in some implementations of the second aspect, the method further includes: receiving second information from the first network device, where the second information includes the first model.

With reference to the second aspect, in some implementations of the second aspect, the second information further includes at least one of the following: the first identifier, indication information indicating that the first model has been registered, the auxiliary information of the first model, an index corresponding to the first identifier, an index corresponding to the first identifier and an applicable cell range, a mapping rule corresponding to the first identifier, or a mapping rule corresponding to the first identifier and an applicable cell range.

According to a third aspect, a communication method is provided, and is applied to a second network device. The method may be performed by the second network device, or may be performed by a component (for example, a chip or a circuit) of the second network device. This is not limited. For ease of description, an example in which the method is performed by the second network device is used below for description.

The method may include: receiving first request information, where the first request information is used to request to register a first model, the first request information includes a first identifier, the first identifier corresponds to the first model, and the first model is a model trained by a first network device; and registering the first model based on the first request information.

For example, the second network device may be a core network device or an operation, administration and maintenance (operation, administration and maintenance, OAM) device.

With reference to the third aspect, in some implementations of the third aspect, receiving the first request information includes: receiving the first request information from the first network device; or receiving the first request information from a terminal device, where the first request information is sent by the terminal device after the terminal device receives indication information from the first network device, and the indication information includes the first request information. With reference to the third aspect, in some implementations of the third aspect, the method further includes: sending a registration result of the first model to the first network device based on the first request information from the first network device; or sending a registration result of the first model to the terminal device based on the first request information from the terminal device.

It should be understood that, for beneficial effects of the second aspect and the third aspect, refer to descriptions in the first aspect.

According to a fourth aspect, a communication apparatus is provided, including: a processing unit, configured to obtain a first model through training; and a transceiver unit, configured to send first request information, where the first request information is used to request to register the first model, the first request information includes a first identifier, and the first identifier corresponds to the first model.

The transceiver unit may perform receiving and sending in the first aspect, and the processing unit may perform processing other than receiving and sending in the first aspect.

According to a fifth aspect, a communication apparatus is provided, including: a transceiver unit, configured to receive indication information from a first network device, where the indication information includes first request information, the indication information indicates a terminal device to forward the first request information to a second network device, the first request information is used to request to register a first model, the first request information includes a first identifier, the first identifier corresponds to the first model, the first model is a model trained by the first network device, and the transceiver unit is further configured to forward the first request information to the second network device.

Optionally, the communication apparatus may further include a processing unit. For example, the processing unit is configured to determine, based on the indication information, to forward the first request message to the second network device.

The transceiver unit may perform receiving and sending in the second aspect, and the processing unit may perform processing other than receiving and sending in the second aspect.

According to a sixth aspect, a communication apparatus is provided, including: a transceiver unit, configured to receive first request information, where the first request information is used to request to register a first model, the first request information includes a first identifier, the first identifier corresponds to the first model, and the first model is a model trained by a first network device; and a processing unit, configured to register the first model based on the first request information.

The transceiver unit may perform receiving and sending in the third aspect, and the processing unit may perform processing other than receiving and sending in the third aspect.

According to a seventh aspect, a communication apparatus is provided, including a processor. The processor is configured to: invoke a computer program from a memory and run the computer program, so that the communication apparatus performs the method in any possible implementation of the first aspect to the third aspect.

Optionally, there may be one or more processors.

Optionally, the communication apparatus further includes one or more memories. The memory may be integrated with the processor, or the memory and the processor are separately disposed. Optionally, the communication apparatus further includes a transmitter machine (transmitter) and a receiver machine (receiver).

According to an eighth aspect, a communication system is provided, including a first network device and a second network device. The first network device is configured to perform the method in any possible implementation of the first aspect, and the second network device is configured to perform the method in any possible implementation of the third aspect.

With reference to the eighth aspect, in some implementations of the eighth aspect, the communication system further includes a terminal device. The terminal device is configured to perform the method in any possible implementation of the second aspect.

According to a ninth aspect, a computer-readable storage medium is provided. The computer-readable storage medium stores a computer program or code. When the computer program or code is run on a computer, the computer is enabled to perform the method in any possible implementation of the first aspect to the third aspect.

According to a tenth aspect, a chip is provided, including at least one processor. The at least one processor is coupled to a memory. The memory is configured to store a computer program. The processor is configured to: invoke the computer program from the memory and run the computer program, so that an apparatus in which the chip system is installed performs the method in any possible implementation of the first aspect to the third aspect.

The chip may include an input circuit or interface for sending information or data, and an output circuit or interface for receiving information or data.

According to an eleventh aspect, a computer program product is provided. The computer program product includes computer program code. When the computer program code is run by an apparatus, the apparatus is enabled to perform the method in any possible implementation of the first aspect to the third aspect.

### BRIEF DESCRIPTION OF DRAWINGS

FIG. 1 is a diagram of a communication system 100 according to an embodiment of this application;
FIG. 2 is a diagram of an architecture of an access network device according to an embodiment of this application;
FIG. 3 is a diagram of an AI application framework according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a block diagram of a communication apparatus 1000 according to an embodiment of this application;
FIG. 7 is a block diagram of a communication apparatus 2000 according to an embodiment of this application; and
FIG. 8 is a block diagram of a chip system 3000 according to an embodiment of this application.

### DESCRIPTION OF EMBODIMENTS

The following describes technical solutions of embodiments in this application with reference to accompanying drawings.

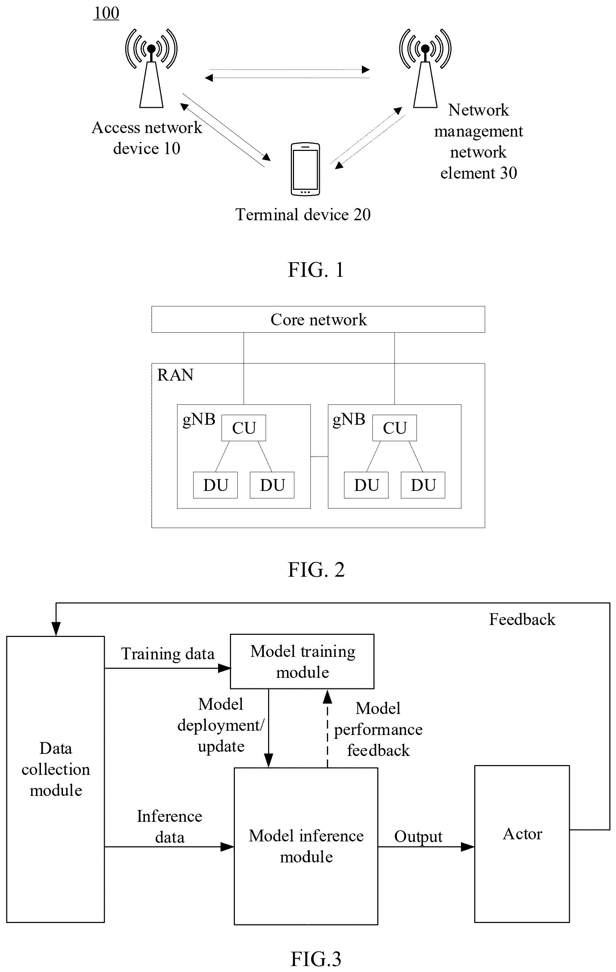

FIG. 1 is a diagram of a communication system 100 according to an embodiment of this application. As shown in FIG. 1, the communication system 100 includes an access network device 10, a terminal device 20, and a network management network element 30. In the communication system, the terminal device 20 may send uplink data/an uplink signal/uplink information to the access network device 10, and the access network device 10 may send downlink data/a downlink signal/downlink information to the terminal device 20. Optionally, data/a signal/information may be transmitted between the access network device 10 and the network management network element 30. Optionally, data/a signal/information may be transmitted between the terminal device 20 and the network management network element 30.

A communication method provided in embodiments of this application may further relate to a device or a transmission node that is not shown in FIG. 1. This is not limited in embodiments of this application.

The communication system used in embodiments of this application is merely an example for description, and a communication system applicable to embodiments of this application is not limited thereto. Any communication system that can implement functions of the foregoing devices is applicable to embodiments of this application.

The technical solutions in embodiments of this application may be applied to various communication systems such as a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a 5th generation (5th Generation, 5G) system like an NR system, or a future evolved communication system (for example, a 6G mobile communication system). The technical solutions in embodiments of this application may be applied to various scenarios such as vehicle-to-everything (vehicle-to-everything, V2X), internet of vehicles, machine-type communication (machine-type communication, MTC), internet of things (Internet of things, IoT), long term evolution-machine (long term evolution-machine, LTE-M) technology, and machine-to-machine (machine-to-machine, M2M).

The terminal device may be a wireless terminal device that can receive scheduling and indication information of an access network device. The terminal device may be a device that provides a user with voice and/or data connectivity, a handheld device with a wireless connection function, or another processing device connected to a wireless modem.

The terminal device in embodiments of this application may also be referred to as a terminal, an access terminal, a user unit, user equipment (user equipment, UE), a subscriber unit (subscriber unit, SU), a subscriber station (subscriber station, SS), a subscriber station, a mobile station (mobile station, MB), a mobile console (mobile), a remote station (remote station, RS), an access point (access point, AP), a remote terminal (remote terminal, RT), an access terminal (access terminal, AT), a user terminal (user terminal, UT), or a user agent (user agent, UA). The terminal device is a device that includes a wireless communication function (providing a user with voice/data connectivity), for example, a handheld device or a vehicle-mounted device with a wireless connection function. The terminal device in embodiments of this application may be a mobile phone, a tablet computer, a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control, a wireless terminal (for example, a vehicle-mounted device, an entire vehicle device, a vehicle-mounted module, or a vehicle) in an internet of vehicles, a cellular phone, a cordless phone, a session initiation protocol (session initiation protocol, SIP) phone, a wireless local loop (wireless local loop, WLL) station, a personal digital assistant (personal digital assistant, PDA), a personal communication service (personal communication service, PCS) phone, a handheld device with a wireless communication function, a computing device, another processing device connected to a wireless modem, a wearable device, or the like. In addition, the terminal device may be further used in scenarios such as self-driving, telemedicine, smart grid, transportation safety, smart city, and smart home.

A network device in embodiments of this application may be an access network device, or may be referred to as a radio access network (radio access network, RAN) device or a RAN node. The RAN may be connected to a core network, and includes but is not limited to various base stations such as a next Generation NodeB (gNodeB, gNB), an evolved NodeB (evolved NodeB, eNB), or a base station device in a future evolved communication system; or may be a server, a wearable device, a vehicle-mounted device, a wireless relay node, a wireless backhaul node, a transmission point (transmission point, TP), a transmission and reception point (transmission and reception point, TRP), or the like; or may be one or a group of (including a plurality of antenna panels) antenna panels of a base station; or may be a network node that forms a base station, for example, a baseband unit (BBU), a central unit (central unit, CU), or a distributed unit (distributed unit, DU). The base station may be a macro base station, a micro base station, a picocell base station, a small cell, a relay station, a balloon station, or the like.

The network management network element in embodiments of this application may be a network element that registers an AI model.

For example, the network management network element may be a core network (code network, CN) device, and the core network device may include one or more core network elements. A 5G core network is used as an example. The 5G core network includes an access and mobility management function (access and mobility management function, AMF) network element responsible for services such as mobility management and access management, a session management function (session management function, SMF) network element responsible for session management, a user plane function (user plane function, UPF) network element responsible for data packet routing and forwarding and quality of service (quality of service, QoS) control of a user plane, a policy control function (policy control function, PCF) network element, and the like. The core network elements may work independently, or may be combined together to implement some control functions. For example, the AMF, the SMF, and the PCF may be combined together to serve as a core network device.

For example, the network management network element may be an operation, administration and maintenance (operation, administration and maintenance, OAM) entity, and OAM may classify network management work into three categories: operation (operation), administration (administration), and maintenance (maintenance). The operation is mainly to complete routine analysis, prediction, planning, and configuration for a network and a service, and the maintenance is mainly routine operation activities such as network and service tests and fault management. For example, in this solution, the OAM may store and manage an AI model/model identifier, receive a model registration request sent by a first access network device, and make a decision.

For example, the network management network element may be an over-the-top OTT (over-the-top). The OTT is a network element independent of a 3GPP network element. In this solution, main functions of the OTT are to store and manage the AI model/model ID, receive a model registration request sent by the 3GPP network element, and make a decision on the registration request.

For example, the network management network element may alternatively be a third-party node. The third-party node may be, for example, a third-party application service platform, and a third party other than an operator provides a service for the user through a network of the operator.

It may be understood that all or some functions of the network device or the terminal device in this application may alternatively be implemented by using a software function running on hardware, or may be implemented by using an instantiated virtualization function on a platform (for example, a cloud platform).

FIG. 2 is a diagram of an architecture of an access network device according to an embodiment of this application. As shown in FIG. 2, the access network device in this embodiment of this application may use a spilt architecture including a CU and a DU. It may be understood that the access network device is divided into the CU and the DU from a perspective of logical functions. The CU and the DU may be physically separated or deployed together. A plurality of DUs may share one CU. One DU may alternatively be connected to a plurality of CUs (not shown in FIG. 2). The CU and the DU may be connected through an interface, for example, an F1 interface. The CU and the DU may be classified based on a protocol layer of a wireless network. In a possible classification manner, the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that processing function division of the CU and the DU based on protocol layers is merely an example, and the CU and the DU may be classified in another manner. For example, the CU or the DU may be divided into functions of more protocol layers than those in the foregoing classification manner. For example, the CU or the DU may alternatively be divided into some processing functions of protocol layers in the foregoing classification manner.

In a design, functions of the CU or the DU may be divided based on a service type or another system requirement. For example, division is performed based on a delay. Functions whose processing time meets a delay requirement are set in the DU for implementation, and functions whose processing time does not meet the delay requirement are set in the CU for implementation. In another design, the CU may alternatively have one or more functions of a core network. One or more CUs may be disposed together or separately. For example, the CUs may be disposed on a network side for ease of centralized management. The DU may have a plurality of radio frequency functions, or the radio frequency functions may be disposed remotely.

Functions of the CU may be implemented by one entity or different entities. For example, the functions of the CU may be further divided. For example, a control plane (control plane, CP) and a user plane (user plane, UP) are separated, namely, a CU control plane (CU-CP) and a CU user plane (CU-UP). The CU control plane, namely, the CU-CP, may further include an architecture in which the CU-CP is further divided. To be specific, the CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In different systems, the CU (including a CU-CP or a CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. For ease of description, the CU, the CU-CP, the CU-UP, and the DU are used as examples for description in this application. An AI module is a module with a machine learning computing capability. In a wireless communication system, the AI module may be located in an OAM, or may be located in the access network device (for example, if the access network device is of a split architecture, the AI module may be located in a CU), or may be located in a terminal device, or may be independently a network element entity AI control layer (AI control layer, AIC). If an O-RAN architecture is used, the AI module may alternatively be disposed in a RAN intelligent controller (RAN intelligent controller, RIC), and the RIC may obtain network-side and/or terminal-side information from the access network device and/or the terminal device for AI model training or inference. A training or inference result may be transmitted to a RAN node and/or the terminal device.

In the wireless communication system, the AI module is mainly used to perform a series of AI calculations such as model establishment, training approximation, and reinforcement learning based on input data. The input data may be network running data provided by the access network device or monitored by the OAM, for example, network load and channel quality, or a transmission status of user plane data provided by the core network. A trained model provided by the AI module has a prediction function for a network change on a RAN side, and may be used for load prediction, terminal device path prediction, and the like. In addition, the AI module may further perform policy inference from perspectives of network energy saving, mobility optimization, and the like based on a result of predicting RAN network performance by the trained model, to obtain an appropriate and efficient energy saving policy, mobility optimization policy, and the like.

When the AI model is located in a CU, and a CP and a UP of the CU are separated, the CP may be responsible for receiving an AI model and subsequent AI inference and policy generation functions. When the CU-CP is further divided into a CU-CP 1 and a CU-CP 2, the CU-CP 1 may be responsible for receiving the AI model and a subsequent inference function of the AI model, and generating specific interaction signaling, and the CU-CP 2 sends the signaling.

FIG. 3 is a diagram of an AI application framework according to an embodiment of this application. As shown in FIG. 3, the AI application framework includes a data collection module, a model training module, a model inference module, and an actor (Actor).

The model training module and the model inference module are examples of an AI module. For example, the network device and the terminal device shown in FIG. 1, and the CU, the DU, or another management entity shown in FIG. 2 may input data to the data collection module. The data collection module may be used as a database for AI model training and data analysis and inference. The model training module analyzes training data output by the data collection module, provides an available AI model, and deploys the obtained AI model to the model inference module. The model inference module provides, for network running based on inference data output by the data collection module, appropriate prediction based on the AI model, and feeds back performance data of the AI model to the model training module. Subsequently, the model training module continues to train the model based on the fed back performance data, and notifies the model inference module of an updated AI model. Alternatively, the model inference module indicates, based on inference data output by the data collection module and the AI model, a network to perform policy adjustment, related policy adjustment is planned by the actor in a unified manner, and a policy is sent to a plurality of network entities for running. In this case, after the related policy is applied, specific performance of the network is fed back to the data collection module for storage.

The 3GPP introduces a plurality of AI application scenarios on a RAN side. In some AI application scenarios, a terminal device may implement some AI functions, and an access network device may transmit an AI model to the terminal device. In addition, in some AI application scenarios on a terminal device side, an access network device may implement some AI functions, and a terminal device may transmit an AI model to the access network device.

AI application on the RAN side includes but is not limited to the following application scenarios: energy saving (energy saving), load balancing (load balancing), mobility optimization (mobility optimization), channel state information-reference signal (channel state information-reference signal, CSI-RS) feedback enhancement (feedback enhancement), beam management enhancement (beam management enhancement, BME), positioning accuracy enhancement (positioning accuracy enhancement, PAE), and the like. These application scenarios may also be referred to as AI use cases (use cases).

In the foregoing AI use cases, all or some AI functions may be implemented on the terminal device side. If the AI model is trained by an access network device side, the access network device may send the AI model to the terminal device. To ensure legal authorization of the trained model and that UE and the access network device have a unified understanding of the model, an AI model registration process needs to be designed.

Embodiments of this application provide a communication method and apparatus. An AI model trained by an access network device is registered with a CN device or an OAM network element, and registered related information is agreed between the access network device and a terminal device, so that the terminal device and the access network device have a unified understanding of the AI model, to improve use effect of the AI model in an AI application scenario.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logic relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms, and similar operations or steps in embodiments may be mutually referenced or explained in embodiments. This is not limited in this application.

Second, in this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c. Each of a, b, and c may be singular or plural.

Third, in this application, "first", "second", and various numerical numbers are merely used for differentiation for ease of description, and are not used to limit the scope of embodiments of this application, for example, are used to distinguish between different messages but are not used to describe a specific order or sequence. It should be understood that the objects described in such a way are interchangeable in an appropriate circumstance, so that a solution other than embodiments of this application can be described.

Fourth, in this application, the terms "include", "have", and any variants thereof are intended to cover the non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

Fifth, in this application, "indicate" may include a direct indication and an indirect indication. When a piece of indication information is described as indicating A, the indication information may directly indicate A or indirectly indicate A, but it does not necessarily mean that the indication information definitely carries A.

Sixth, in this application, "sending information to an XX (a device)" may be understood as that a destination of the information is the device, and may include directly or indirectly sending the information to the device. "Receiving information from an XX (a device) or receiving information that is from an XX (a device)" may be understood as that a source of the information is the device, and may include directly or indirectly receiving the information from the device. Information may undergo necessary processing, for example, a format change, between a source end and a destination end that are of information sending. However, the destination end may understand valid information from the source end.

The following describes, in detail with reference to the accompanying drawings, the communication method provided in embodiments of this application. Embodiments provided in this application are applicable to any communication scenario in which a transmit-end device communicates with a receive-end device, for example, may be applied to the communication system shown in FIG. 1.

It should be noted that, in an example, a model in this embodiment of this application may be an AI model.

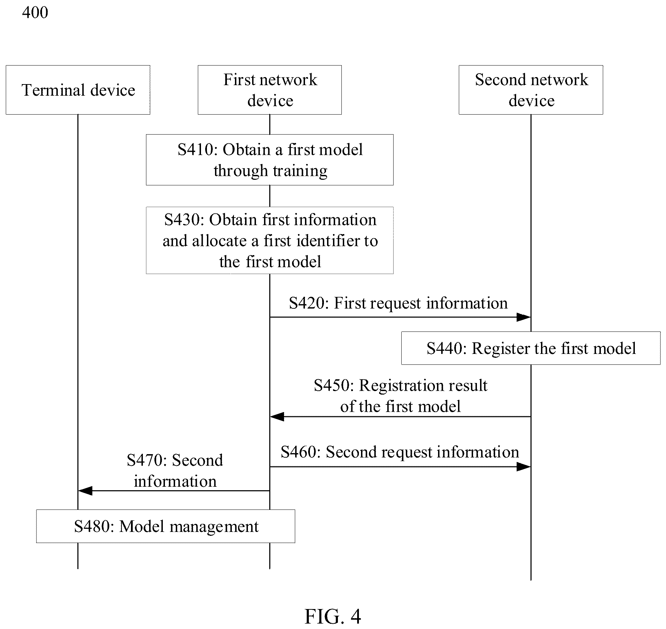

FIG. 4 is a schematic flowchart of a communication method 400 according to an embodiment of this application. A target scenario of this solution is that an AI model is trained on a first network device side, and a first network device sends the trained AI model to a terminal device. A method procedure may be performed by the terminal device, the first network device, and a second network device, or may be performed by a module and/or a component (for example, a chip or an integrated circuit) that are/or installed in the terminal device, the first network device, and a second network device and that have/has a corresponding function. This is not limited in this application. The following uses the terminal device, the first network device, and the second network device as execution bodies for description, and includes the following plurality of steps.

S410: The first network device obtains a first model through training.

The first network device determines a to-be-trained AI model.

For example, the first network device determines a training requirement of a model, collects data, and determines the to-be-trained AI model based on the training requirement of the model and the collected data. The first network device determines the training requirement of the model based on analysis of the first network device on an AI application scenario and a requirement. The data collected by the first network device may include a terminal device capability and measured data for model training.

The training requirement may be obtained based on one or more of the following factors: for example, the first network device determines, based on a current performance optimization requirement, for example, throughput improvement or UE access rate improvement, a scenario in which the AI model is to be applied; or the training requirement may be a capability of the terminal device and the first network device to currently apply AI, for example, a hardware capability or a capability of supporting the model; or the training requirement may be a training requirement indicated by another network node, for example, an OAM, to the first network device.

After determining the to-be-trained AI model, the first network device collects data for model training, and obtains the first model through training.

Further, after the first model is generated, auxiliary information (meta information) of the first model may be further generated. The meta information may be used to describe a model.

For example, the meta information may include at least one of the following: input information of the model, output information of the model, a version number corresponding to the model, a format of the model, a requirement of the model on a device capability, an identifier of a vendor to which the model can be applied, an identifier of a vendor to which the model belongs, a scenario in which the model can be used, a use case (use case) of the model, a scenario-related configuration, a configuration related to a cell/base station corresponding to a scenario, complexity of model calculation (for example, a quantity of parameters used by the model or a quantity of operations in a process of using the model), a model processing capability requirement, a model data volume range, model performance, or a model function. The model in the meta information is a model corresponding to the meta information. For example, the meta information of the first model describes the first model.

In an implementation, a model version number may be a version number corresponding to a currently used model; a format of a model may be a compilation format of the model; a requirement of a model on a terminal device capability may be a computing capability, a storage capability, or the like that can be provided by the terminal device; an identifier of an applicable model of a model may be an identifier of a network device vendor to which the model can be applied, an identifier of a terminal to which the model can be applied, or the like; a vendor identifier to which a model vendor belongs may be an identifier of a vendor that owns the model; performance of a model may include: accuracy of the model, a deviation of the model, a variance of the deviation of the model, an operation rate of the model, and the like; a use case of a model may be a use case of target application of the model, for example, the use case of the model may include energy saving (energy saving), load balancing (load balancing), mobility optimization (mobility optimization), channel state information-reference signal (channel state information-reference signal, CSI-RS) feedback enhancement (feedback enhancement), beam management enhancement (beam management enhancement, BME), and positioning accuracy enhancement (positioning accuracy enhancement, PAE); and a scenario in which a model may be used may include that the model may be used in a specific cell, or in cell networking of a specific topology, or with specific channel quality.

It may be understood that specific content of the meta information may be different for different use cases. For example, when the first model is used for beam management enhancement, input information may be signal received power of a beam in an existing measurement result, and output information may be predicted signal received power of a beam. When the first model is used for a use case of CSI-RS feedback enhancement (CSI-RS feedback enhancement), input information in the meta information may be a historical CSI measurement result, and output information may be a CSI measurement result obtained through model prediction.

The first network device in this application may be different specific devices in different use cases. For example, the first network device may be an access network device in CSI-RS feedback enhancement and beam management enhancement, or the first network device may be a location management (location management function, LMF) node in positioning accuracy enhancement, or the first network device may be another third-party node. For example, the another third-party node may be an RIC or an AIC, that is, the RIC node or the AIC node determines model registration information, and performs a registration application process with a control management network element.

In this application, the first network device may be a network device in a non-spilt (non-spilt) architecture, or may be a network device in a spilt (spilt) architecture. When the first network device is a network device in a spilt architecture, the first network device includes a CU and a DU. For the CU and the DU, refer to the descriptions in FIG. 2. Details are not described herein again. In step S410, the CU and the DU may respectively obtain first models through training. For a specific manner of obtaining through training, refer to the foregoing description of obtaining the first model by the first network device through training. Details are not described herein again.

It should be understood that the first model in this application is a model that is not registered and that is trained or to be trained on the first network device.

S420: The first network device sends first request information to the second network device, where the first request information is used to request to register the first model, the first request information includes a first identifier, and the first identifier corresponds to the first model.

For example, the first identifier includes a model identifier (identity, ID) of the first model. The model identifier may include a globally unique identifier for indicating the model, or may be a unique identifier that is for indicating the model and that is in a network range in which an operator provides a service. Specifically, the first identifier may be one or more specific bitstreams, and is used to correspond to one or more model identifiers, and a quantity of bits of the bitstream is not limited. Alternatively, the first identifier may be a range of bitstream sequence numbers, for example, the first identifier may be bitstreams with sequence numbers 1 to 4, and is used to correspond to one or more model identifiers. The model identifier may be a bitstream that is globally uniformly allocated, or may be a bitstream allocated by each operator, or may be a bitstream that is globally uniformly allocated to each operator and then allocated by the operator. With regard to content of the model identifier, the model identifier may be a bitstream without a special information meaning, or may be a bitstream including at least one of the following: operator identification information, a PLMN, all or a part of meta information, and a list of cells capable of using a model corresponding to the model identifier.

In an implementation, the first request information may further include at least one of the following: the meta information of the first model, a list of terminal devices capable of using the first model, a list of cells capable of using the first model, a list of public land mobile networks (public land mobile networks, PLMNs) capable of using the first model, a predicted time for using the first model, an index (index) for indicating the first model, or a mapping relationship for mapping the first model. For the meta information, refer to the related descriptions in S410. Details are not described herein again. The index (index) for indicating the first model means that the first identifier or the first model is indicated by using information shorter than the first identifier. For example, the index may include a part of content in the model identifier. It should be noted that the first identifier and the index are different information. The first identifier is an identifier that can uniquely indicate the first model in global or operator coverage. The index is generated only by the first network device to indicate the first identifier or the first model more conveniently. After leaving coverage of the first network device, another access network device may not determine the first identifier or the first model by using the index. The mapping relationship for mapping the first model means mapping the first identifier or the first model to a shorter bitstream. The index and the mapping relationship may be used as a simple manner of indicating the first model when the first network device and the second network device subsequently perform interaction of the first model.

For example, the (index) for indicating the first model and the mapping relationship for mapping the first model may be used for subsequent interaction between the first network device and the second network device. For example, the interaction between the first network device and the second network device may include activating, deactivating, switching, or rolling back the first model between the first network device and the second network device, where the rollback is from enabling an AI function to disabling the AI function. Because there is a large quantity of bits in the model identifier, indicating the first model by using a shorter index or mapping relationship can reduce signaling overheads.

It should be understood that, for ease of description in this application, the first model is used as an example. Actually, the first network device may register a plurality of models. The plurality of models may be indicated by using same request information to the second network device for registration, or each model may be separately indicated by using request information to the second network device for registration. This is not limited in this application. Information corresponding to each model in the request information is similar to information corresponding to the first model in the first request information. Details are not described herein again.

In step S420, if the first network device is the network device in the spilt architecture, the CU integrates information about the to-be-registered model on the CU and the DU to generate first request information, and the CU sends the first request information to the second network device. In an implementation, the first request information generated by the CU may further include a unit identifier. The unit identifier may identify a CU or a DU that trains a model corresponding to a model identifier in the first request information. Training herein may be training completed, training being performed, or training to be performed.

In this application, the first model is registered with the second network device. For example, the second network device may be a core network device, or may be an OAM.

It should be understood that step S420 and step S410 are not subject to a sequence. To be specific, the first network device may initiate registration to the second network device after completing model training, or the first network device may initiate registration to the second network device after confirming the training requirement of the model and before completing model training.

In an implementation, before S420, the method further includes S430.

S430: The first network device obtains first information, and allocates the first identifier to the first model based on the first information, where the first information includes at least one model identifier registerable by the first network device.

Specifically, the first network device may obtain the first information online (online), for example, the first network device receives the first information from the second network device. The first network device may alternatively obtain the first information offline (offline), for example, the first information is preconfigured in the first network device, or the first information is preset in the first network device before delivery. The first network device may alternatively obtain the first information through generation by the first network device, for example, the first network device may randomly generate the first information, or generate the first information based on the training requirement of the model and the collected data.

The model identifier in the first information is a model identifier of a model that can be used by the first network device for registration, and may also be referred to as a preset identifier. For the preset identifier, refer to the description of the model identifier in S420. Details are not described herein again. In addition, the preset identifier may be distinguished based on a cell managed by the first network device. For example, the first network device manages a cell 1 and a cell 2, the cell 1 may use an ID #1, and the cell 2 may use an ID #2.

Optionally, the first information may further include first related information of the model corresponding to the preset identifier. For example, the first related information may include at least one of the following: meta information of the model corresponding to the preset identifier, information about a cell capable of using the model corresponding to the preset identifier, information about a valid time of the model corresponding to the preset identifier, and information about a terminal device capable of using the model corresponding to the preset identifier.

The information about the cell capable of using the model corresponding to the preset identifier may include at least one of the following information: a cell global identifier (cell global identifier, CGI), a physical cell identifier (physical cell identifier, PCI) and a frequency, a cell identifier (cell identifier, cell ID), a non-public network identifier (non-public network identifier, NPN ID), a non-terrestrial network identifier (non-terrestrial network identifier, NTN ID), a tracking area code (tracking area code, TAC), a public land mobile network (Public Land Mobile Network, PLMN), or identification information of a network device to which the cell belongs (for example, a global network device identifier). The non-public network identifier may include a CAG ID of a PNI-NPN and/or an NID of an SNPN.

For the meta information, refer to related descriptions in S410. Details are not described herein again. However, it should be understood that specific content included in the meta information in S430 may not be completely the same as that in the meta information in S410 or S420. For example, the meta information in S430 includes input information of the model, output information of the model, a version number corresponding to the model, and a format of the model; and the meta information in S410 includes the complexity of model calculation, the model processing capability requirement, the model data volume range, and the format of the model.

After obtaining the first information, the first network device selects a model identifier from preset identifiers in the first information and allocates the model identifier to the first model. For example, if the first information includes the meta information of the model corresponding to the preset identifier, and the first network device obtains the meta information of the first model, the first network device may perform pairing with the meta information of the first model based on the meta information of the model corresponding to the preset identifier. If the meta information of the model corresponding to the preset identifier is partially or completely the same as the meta information of the first model, the preset identifier is used as the first identifier of the first model. Alternatively, the first network device may randomly select a preset identifier from preset identifiers as the model identifier of the first model, that is, randomly select the first identifier.

For example, when the first network device is the network device in the spilt architecture, the CU and/or the DU may obtain the preset identifier. Further, the CU and/or the DU may further obtain the first related information of the model corresponding to the preset identifier. For a specific obtaining manner and specific content of the preset identifier and the first related information of the model corresponding to the preset identifier, refer to the foregoing description of obtaining the first information by the first network device. Details are not described herein again.

After the DU and the CU separately confirm respective model training requirements, interaction of model identifier allocation is performed. For example, in an interaction process, the CU may send REQUEST request information to the DU to initiate interaction of model identifier allocation, that is, the CU requests, from the DU based on the REQUEST request information, information about model identifier allocation on the DU; or the DU may actively initiate interaction of model identifier allocation, that is, the DU actively sends information about model identifier allocation on the DU to the CU. This is not limited in this application.

Specifically, when the DU has obtained the preset identifier, the CU obtains information about the preset identifier that has been obtained by the DU. Further, if the DU further obtains the first related information of the model corresponding to the preset identifier, the CU may further obtain the first related information that is of the model corresponding to the preset identifier and that has been obtained by the DU. The CU may actively obtain the foregoing information from the DU. For example, the CU periodically obtains the foregoing information from the DU. Alternatively, the CU may obtain the foregoing information from the DU after receiving corresponding indication information. A source of the indication information is not limited in this application. Alternatively, the DU may even actively indicate the foregoing information to the CU.

Optionally, the DU may further indicate, to the CU, a model identifier that can be provided by the DU for another DU or the CU.

Optionally, the DU may further indicate, to the CU, whether more model identifiers are required. Further, the DU may further indicate, to the CU, a required specific model identifier.

After obtaining the foregoing information, the CU may integrate preset identifiers obtained by all DUs, allocate a model identifier to each DU, and send the corresponding model identifier to the DU. Further, if the foregoing information obtained by the CU includes the first related information of the model corresponding to the preset identifier, content integrated and sent by the CU to the DU may also include the first related information of the model corresponding to the preset identifier.

When the DU does not obtain the preset identifier, the CU obtains requirement information of the DU. The requirement information may include at least one of the following: a quantity of model identifiers required by the DU, the model identifier required by the DU, and first related information of a model corresponding to the model identifier required by the DU. The requirement information of the DU obtained by the CU may be actively requested by the CU from the DU, for example, the CU sends a request to the DU to request the DU to periodically send the requirement information. The requirement information of the DU obtained by the CU may alternatively be actively indicated by the DU to the CU, for example, the DU actively and periodically sends the requirement information to the CU.

After obtaining the requirement information of the DU, the CU may integrate requirement information of all DUs, and allocate a preset identifier on the CU to each DU. Further, the CU may further send, to each DU, first related information of a model corresponding to the preset identifier. Further, in the network device in the spilt architecture, one CU may correspond to a plurality of DUs. If some DUs in the plurality of DUs have obtained preset identifiers, and some DUs do not obtain preset identifiers, the CU may integrate preset identifiers obtained by all the DUs and requirement information of all the DUs, to obtain a model identifier that can be allocated to each DU, and send the model identifier to the DU. Further, if the CU further obtains the first related information of the model corresponding to the preset identifier on the DU, content integrated and sent by the CU to the DU may also include the first related information of the model corresponding to the preset identifier. For example, the CU may obtain the model identifier allocated to each DU based on one or more factors such as ensuring that the DU obtains sufficient model identifiers, avoiding that one model corresponds to a plurality of model identifiers, and avoiding that a plurality of DUs require a same model identifier.

For example, if the DU indicates to the CU that more model identifiers are required, the CU may allocate, to the DU, another model identifier that can be provided by another DU or the CU.

For example, if a plurality of DUs indicate to the CU that a same model identifier is required, the central unit may allocate the model identifier to one of the DUs, and indicate to the other DU that the model identifier has been allocated.

For example, if the DU indicates different model identifiers for a same model, the CU may unify the model identifiers of the model.

The CU and the DU interact with each other on a requirement of a preset model identifier, and the CU performs integration, so that requirements that are of model identifiers and that correspond to different DUs in the split architecture can be balanced.

It should be noted that step S430 and step S410 are not subject to a strict sequence. To be specific, the first network device may allocate a model identifier to a model from preset identifiers after completing model training, or the first network device may allocate, from preset identifiers after confirming a model training requirement, a model identifier to a model that is being trained or to be trained.

S440: The second network device registers the first model.

Specifically, after the second network device receives registration information (namely, the first request information in S420 in this application) sent by the first network device, the second network device may determine whether the registration information is valid. If the second network device approves a registration result corresponding to the registration information, the model registration succeeds; or if the second network device does not approve a registration result corresponding to the registration information, the model registration fails.

In an implementation, whether to approve the registration information may be determined by the second network device based on a preset condition. For example, if a quantity of model identifiers that the first network device applies for registration exceeds a quantity approved by the second network device, or one or more pieces of meta information of a model that the first network device applies for registration do not meet a requirement of the second network device, the second network device does not approve the registration information.

S450: The second network device feeds back the registration result of the first model to the first network device.

After receiving the first request information sent by the first network device, the second network device may determine whether to accept a request, and feed back the registration result to the first network device.

Specifically, if the second network device accepts the request, the second network device may feed back, to the first network device, that the registration is accepted or the registration succeeds. The feedback may be explicit or implicit.

For example, the second network device may explicitly feed back, by sending ACK information to the first network device, that the registration succeeds or the registration is accepted.

For example, the second network device may not send feedback information to the first network device, to implicitly indicate that the registration succeeds or the registration is accepted. Correspondingly, the first network device includes a timer. After sending the first request information, the first network device starts the timer. If the first network device does not receive the feedback information from the second network device within a first time period, the first network device determines that the first model is successfully registered or the second network device has accepted the registration of the first model.

In a case of feedback of accepting the registration by the second network device or registration success, the first second network device may perform step S470. When the first network device is the network device in the spilt architecture, the CU may obtain a registration result, and correspondingly send the registration result, namely, a model identifier and/or first related information, to each DU.

If the second network device does not accept the request, the second network device may feed back, to the first network device, that the registration is not accepted or the registration fails. Similarly, the feedback may be explicit or implicit.

For example, the second network device may explicitly feed back, by sending failure information to the first network device, that the registration fails or the registration is not accepted.

Further, the second network device may further indicate, in the failure information, a reason why the registration is not accepted. For example, the second network device determines, based on the meta information attached in the first request information, that the first model does not meet a requirement of the second network device. In this case, the second network device feeds back, to the first network device, that a reason why the registration is not accepted is that the first model does not meet the requirement of the second network device.

For example, the second network device may not send feedback information to the first network device, to implicitly indicate that the registration fails or the registration is not accepted. Correspondingly, the first network device includes a timer. After sending the first request information, the first network device starts the timer. If the first network device does not receive the feedback information from the second network device within a second time period, the first network device determines that the first model fails to be registered or the second network device does not accept the registration of the first model.

In a case of feedback of not accepting the registration by the second network device, the first network device may perform step S460.

S460: The first network device re-modifies the training requirement of the first model, and sends second request information based on a modified training requirement. For specific content in the second request information, refer to the description of the first request information. Details are not described herein again.

For example, if the second network device does not approve the input information and the output information in the first model registration information, the first network device modifies a model training manner based on the reason fed back by the second network device, so that input information and output information of a trained model meet a requirement of the second network device. For another example, if the second network device does not approve the accuracy in the first model registration information, the first network device changes a model architecture or a parameter, or performs retraining based on the reason fed back by the second network device, so that accuracy of a trained model meets a requirement of the second network device.

It should be understood that in this application, if the second request information sent in S460 is still not accepted by the second network device, the training requirement of the first model continues to be modified until the second network device accepts registration.

When the first network device is the network device in the spilt architecture, after obtaining the registration result, the CU may choose to re-interact with the DU, re-modify the training requirement of the model, generate second request information, and re-send the second request information to the second network device. For specific interaction, refer to the descriptions in S430. Details are not described herein again. Content of the re-interaction between the CU and the DU may include a reason for registration failure and reallocating preset identifiers.

In an implementation, S470 is performed after the second network device accepts the registration. S470: The first network device sends second information to the terminal device, where the second information includes the first model.

In an implementation, the second information may further include at least one of the following: the first identifier, indication information indicating that the first model has been registered, the meta information of the first model, an index corresponding to the first identifier, an index corresponding to the first identifier and an applicable cell range, a mapping rule corresponding to the first identifier, or a mapping rule corresponding to the first identifier and an applicable cell range. The cell range may be indicated by using a CGI list. The first network device and the terminal device perform interaction of information, for example, an index/a mapping relationship corresponding to a model, so that a complete model identifier does not need to be sent when the model is subsequently indicated. This reduces signaling overheads.

When the first network device is the network device in the spilt architecture, if the first model is a model trained and registered by the CU, the first model may be sent to the corresponding terminal device through the DU. If the first model is a model trained and registered by the DU, the first model may be directly sent to the terminal device; or the first model is first uploaded to the CU, and then the CU sends the first model to the terminal device through the DU.

S480: The first network device and the terminal device perform model management.

For example, the model management includes interaction, for example, model activation/deactivation/rollback/switching between the first network device and the terminal device.

In an implementation, the first network device and the terminal device perform model management on the first model based on the first identifier.

For example, after the first model is registered, if the first model needs to be activated, the first network device may send an activation instruction to the terminal device, where the activation instruction includes the first identifier. After identifying the first identifier in the activation instruction, the terminal device may activate the first model. Optionally, the activation instruction includes one bit to instruct to perform an activation operation on the model.

In an implementation, the first network device and the terminal device perform model management on the first model based on the index/the mapping relationship in S470.

For example, after the first model is registered, if the first model needs to be activated, the first network device may send an activation instruction to the terminal device, where the activation instruction includes the index of the first identifier or an identifier that corresponds to the first identifier and that is determined based on the mapping relationship. After identifying the identifier that corresponds to the first identifier and that is determined based on the mapping relationship or the index of the first identifier in the activation instruction, the terminal device may activate the first model. Optionally, the activation instruction may include one bit to instruct to perform an activation operation on the model.

Based on the foregoing solution, the first network device generates the request information and completes a registration procedure with the second network device by determining model training and application, so that devices in an application scenario of the first model, for example, devices such as a terminal device, an access network device, and a network management network element that are within coverage of a same operator, can have a unified understanding of the first model, including that after registration is completed, each device may invoke the first model by using the first identifier. Further, when moving to coverage of another access network device, the terminal device may still invoke the first model by using the first identifier, to facilitate subsequent detection and management of the first model. This improves use effect of the AI model in each application scenario.

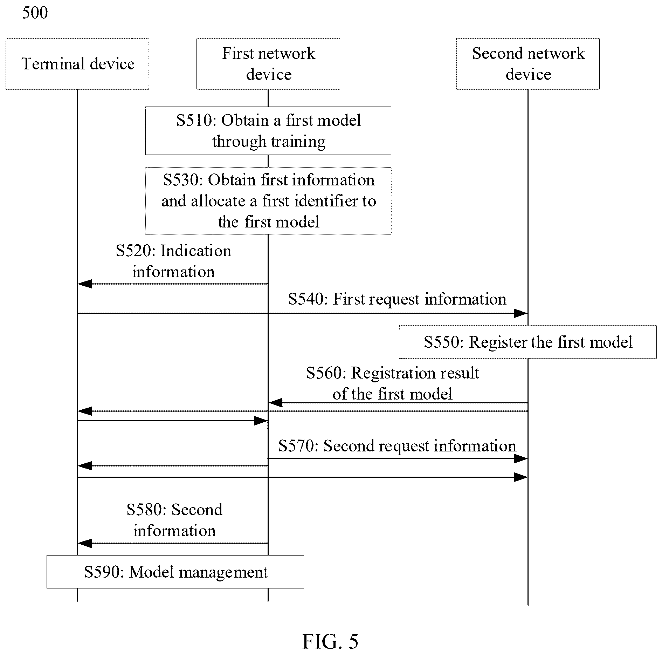

FIG. 5 is a schematic flowchart of a communication method 500 according to an embodiment of this application. A difference from the method 400 in which the first network device may directly communicate with the second network device lies in that, in the method 500, there is no direct communication interface between a first network device and a second network device. Therefore, in the method 500, communication between the first network device and the second network device needs to be forwarded by a terminal device. For example, in the method 500, the first network device may be an access network device, and the second network device may be an OTT. The method 500 includes the following plurality of steps, and content described in the method 400 is not described in detail again.

S510: The first network device obtains a first model through training. For specific descriptions, refer to S410.

S520: The first network device sends indication information to the terminal device, where the indication information includes first request information. For descriptions of the first request information, refer to S420.

The indication information indicates the terminal device to forward the first request information to the second network device.

For example, the indication information includes an identifier of the second network device.

In an implementation, before S520, the method further includes S530.

S530: The first network device obtains first information, and allocates a first identifier to the first model based on the first information. For specific descriptions, refer to S430.

S540: The terminal device sends the first request information to the second network device.

S550: The second network device registers the first model. For a specific registration procedure, refer to descriptions in the standard. Details are not described herein again.

S560: The second network device feeds back a registration result. For specific content and a form of the registration result, refer to related descriptions in S450.

For example, there are two feedback manners. Manner 1: The second network device directly feeds back the registration result to the first network device. In an implementation, the second network device obtains that indicating the first request information corresponds to the first network device. Manner 2: The second network device feeds back the registration result to the terminal device, and the terminal device forwards the registration result to the first network device.

When the first network device is a network device in a spilt architecture, a CU interacts with the terminal device or the second network device to obtain the registration result. After the registration result is obtained, for interaction between the CU and a DU, refer to related descriptions in S450 and S460.

In a case of feedback of not accepting the registration by the second network device, the first network device may perform step S570.

S570: The first network device re-modifies a training requirement of the first model, and sends second request information based on a modified training requirement. For specific content, refer to S460. For example, the first network device may directly send the second request information to the second network device, with reference to S420, or may send the second request information to the second network device through the terminal device, with reference to S520.

S580 is performed after the second network device accepts the registration.

S580: The first network device sends second information to the terminal device, where the second information includes the first model. For specific content, refer to S470.

S590: The first network device and the terminal device perform model management. For specific content, refer to S480.

Based on the foregoing solution, in a case in which there is no direct interface between the first network device and the second network device, for example, the first network device is the access network device, and the second network device is the OTT, the first network device may send the first request information to the second network device through the terminal device, to register the first model.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, the terminal device, the first network device, and the second network device) may alternatively be implemented by a component (for example, a chip or a circuit) of the device.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

The foregoing mainly describes the solutions provided in embodiments of this application from a perspective of interaction between network elements. It may be understood that, to implement the foregoing functions, each of the network elements such as a transmitter device or a receiver device includes a corresponding hardware structure and/or a corresponding software module for performing each of the functions. A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on specific applications and design constraints of the technical solutions. A person skilled in the art may use different methods to implement the described functions for each specific application. However, it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used. An example in which each functional module is obtained through division based on each corresponding function is used below for description.

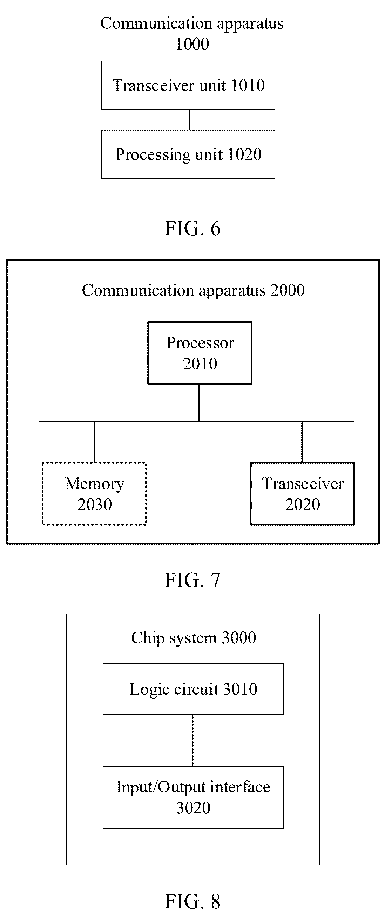

FIG. 6 is a block diagram of a communication apparatus 1000 according to an embodiment of this application. As shown in FIG. 6, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a communication unit.

In a possible design, the apparatus 1000 may implement steps or procedures performed by the first network device in the foregoing method embodiments. The processing unit 1020 is configured to perform a processing-related operation of the first network device in the foregoing method embodiments. The transceiver unit 1010 is configured to perform a receiving/sending-related operation of the first network device in the foregoing method embodiments.

In another possible design, the apparatus 1000 may implement steps or procedures performed by the terminal device in the foregoing method embodiments. The processing unit 1020 is configured to perform a processing-related operation of the terminal device in the foregoing method embodiments. The transceiver unit 1010 is configured to perform a receiving/sending-related operation of the terminal device in the foregoing method embodiments.

In still another possible design, the apparatus 1000 may implement steps or procedures performed by the second network device in the foregoing method embodiments. The processing unit 1020 is configured to perform a processing-related operation of the second network device in the foregoing method embodiments. The transceiver unit 1010 is configured to perform a receiving/sending-related operation of the second network device in the foregoing method embodiments.

It should be understood that the device 1000 herein is implemented in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform the procedures and/or steps corresponding to the transmit end in the foregoing method embodiments; or the device 1000 may be specifically a receive end in the foregoing embodiments, and may be configured to perform the procedures and/or steps corresponding to the receive end in the foregoing method embodiments. To avoid repetition, details are not described herein again.

The device 1000 in the foregoing solutions has a function of implementing the corresponding steps performed by the transmit end in the foregoing methods. Alternatively, the device 1000 in the foregoing solutions has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform a receiving/sending operation and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 6 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a block diagram of a communication apparatus 2000 according to an embodiment of this application. As shown in FIG. 7, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through an internal connection path. The memory 2030 is configured to store instructions, and the processor 2010 may execute the instructions stored in the memory 2030.

In a possible implementation, the apparatus 2000 is configured to implement the procedures and the steps corresponding to the first network device in the foregoing method embodiments.

In another possible implementation, the apparatus 2000 is configured to implement the procedures and the steps corresponding to the terminal device in the foregoing method embodiments.

In still another possible implementation, the apparatus 2000 is configured to implement the procedures and the steps corresponding to the second network device in the foregoing method embodiments.

It should be understood that the device 2000 may be specifically the transmit end or the receive end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmit end or the receive end in the foregoing method embodiments.

Optionally, the memory 2030 may include a read-only memory and a random access memory, and provide instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures corresponding to the transmit end or the receive end in the foregoing method embodiments.

In an implementation process, steps in the foregoing methods can be implemented by using a hardware integrated logic circuit in the processor, or by using instructions in a form of software. The steps in the method disclosed with reference to embodiments of this application may be directly performed and completed by a hardware processor, or may be performed and completed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example description rather than a limitative description, many forms of RAMs may be used, for example, a static random access memory (static RAM, SRAM), a dynamic random access memory (dynamic RAM, DRAM), and a synchronous dynamic random access memory (synchronous DRAM, SDRAM). It should be noted that the memory of the systems and methods described in this specification is intended to include but is not limited to these and any memory of another suitable type.

FIG. 8 is a block diagram of a chip system 3000 according to an embodiment of this application. As shown in FIG. 8, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement methods and functions in embodiments of this application. The input/output interface 3020 may be an input/output circuit in the chip system 3000, and output information processed by the chip system 3000, or input to-be-processed data or signaling information into the chip system 3000 for processing.

In a solution, the chip system 3000 is configured to implement operations performed by the terminal device in the foregoing method embodiments.

For example, the logic circuit 3010 is configured to implement a processing-related operation performed by the terminal device in the foregoing method embodiments, for example, a processing-related operation performed by the terminal device in the embodiment shown in FIG. 4 or FIG. 5. The input/output interface 3020 is configured to implement a sending and/or receiving-related operation performed by the terminal device in the foregoing method embodiments, for example, a sending and/or receiving-related operation performed by the terminal device in the embodiment shown in FIG. 4 or FIG. 5.

An embodiment of this application further provides a computer-readable storage medium. The computer-readable storage medium stores computer instructions for implementing all or some of the steps of the methods performed by the terminal device or the first network device in the foregoing method embodiments. The storage medium in this application includes any medium that can store program code, for example, a USB flash disk, a removable hard disk, a read-only memory, a random access memory, a magnetic disk, or an optical disc.

An embodiment of this application further provides a computer program product, including instructions. When the instructions are executed by a computer, the methods performed by the terminal device and the first network device in the foregoing method embodiments are implemented.

An embodiment of this application further provides a communication system. The communication system includes the first network device, the terminal device, and the second network device in the foregoing embodiments.

For explanations and beneficial effects of related content in any one of the apparatuses provided above, refer to the corresponding method embodiments provided above. Details are not described herein again.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on specific applications and design constraints of the technical solutions. A person skilled in the art may use different methods to implement the described functions for each specific application. However, it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division of the units is merely logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one location, or may be distributed on a plurality of network units. Some or all of the units may be selected based on actual conditions to achieve the objectives of the solutions in embodiments.

In addition, functional units in embodiments of this application may be integrated into one processing unit, each of the units may exist alone physically, or two or more units may be integrated into one unit.

## Claims

1. A communication method, applied to a first network device and comprising:
obtaining a first model through training; and
sending first request information, wherein the first request information is used to request to register the first model, the first request information comprises a first identifier, and the first identifier corresponds to the first model.

2. The method according to claim 1, wherein the method further comprises:
obtaining first information, wherein the first information comprises at least one model identifier, and the at least one model identifier is a model identifier registerable by the first network device; and
allocating the first identifier to the first model based on the first information.

3. The method according to claim 2, wherein obtaining the first information comprises:
receiving the first information from a second network device; or
the first information is preconfigured in the first network device.

4. The method according to claim 2, wherein obtaining the first information comprises:
generating, by the first network device, the first information.

5. The method according to any one of claims 2 to 4, wherein the first information further comprises at least one of the following:
auxiliary information of a model corresponding to the at least one model identifier, information about a cell capable of using a model corresponding to the at least one model identifier, information about a valid time of a model corresponding to the at least one model identifier, or information about a terminal device capable of using a model corresponding to the at least one model identifier.

6. The method according to any one of claims 1 to 5, wherein the first request information further comprises at least one of the following:
auxiliary information of the first model, a list of terminal devices capable of using the first model, a list of cells capable of using the first model, a list of public land mobile networks capable of using the first model, a predicted time for using the first model, an index for indicating the first model, or a mapping relationship for mapping the first model.

7. The method according to any one of claims 1 to 6, wherein sending the first request information comprises:
sending the first request information to the second network device.

8. The method according to any one of claims 1 to 6, wherein sending the first request information comprises:
sending indication information to a terminal device, wherein the indication information comprises the first request information, to indicate the terminal device to forward the first request information to the second network device.

9. The method according to claim 8, wherein the method further comprises:
receiving a registration result of the first model from the terminal device.

10. The method according to claim 7 or 8, wherein the method further comprises:
receiving a registration result of the first model from the second network device.

11. The method according to claim 9 or 10, wherein if the registration result is that the registration succeeds, the method further comprises:
sending second information to the terminal device, wherein the second information comprises the first model.

12. The method according to claim 11, wherein the second information further comprises at least one of the following:
the first identifier, indication information indicating that the first model has been registered, the auxiliary information of the first model, an index corresponding to the first identifier, an index corresponding to the first identifier and an applicable cell range, a mapping rule corresponding to the first identifier, or a mapping rule corresponding to the first identifier and an applicable cell range.

13. The method according to claim 9 or 10, wherein if the registration result is that the registration fails, the method further comprises:
sending second request information based on a modified training requirement of the first model.

14. The method according to any one of claims 1 to 13, wherein the first network device comprises a central unit and a distributed unit, and the method further comprises: allocating, by the central unit, a model identifier to the distributed unit based on a model identifier that has been allocated to the distributed unit and/or information about a requirement of the distributed unit for a model identifier, and sending the model identifier to the distributed unit.

15. The method according to any one of claims 1 to 14, wherein the first request information further comprises:
a unit identifier, wherein the unit identifier is used to identify a central unit or a distributed unit for training the first model.

16. The method according to claim 11 or 12, wherein the first network device comprises a central unit and a distributed unit, and the method further comprises:
if the first model is a model trained by the central unit, sending, by the central unit, the second information to the terminal device through the distributed unit; or
if the first model is a model trained by the distributed unit, sending, by the distributed unit, the second information to the terminal device; or sending, by the distributed unit, the first model to the central unit, and sending, by the central unit, the second information to the terminal device through the distributed unit.

17. A communication method, applied to a terminal device and comprising:
receiving indication information from a first network device, wherein the indication information comprises first request information, the indication information indicates the terminal device to forward the first request information to a second network device, the first request information is used to request to register a first model, the first request information comprises a first identifier, the first identifier corresponds to the first model, and the first model is a model trained by the first network device; and
forwarding the first request information to the second network device.

18. The method according to claim 17, wherein the method further comprises:
receiving a registration result of the first model from the second network device and forwarding the registration result to the first network device.

19. The method according to claim 17 or 18, wherein the first request information further comprises at least one of the following:
auxiliary information of the first model, a list of terminal devices capable of using the first model, a list of cells capable of using the first model, a list of public land mobile networks capable of using the first model, a predicted time for using the first model, an index for indicating the first model, or a mapping relationship for mapping the first model.

20. The method according to any one of claims 17 to 19, wherein the method further comprises:
receiving second information from the first network device, wherein the second information comprises the first model.

21. The method according to claim 20, wherein the second information further comprises at least one of the following:
the first identifier, indication information indicating that the first model has been registered, the auxiliary information of the first model, an index corresponding to the first identifier, an index corresponding to the first identifier and an applicable cell range, a mapping rule corresponding to the first identifier, or a mapping rule corresponding to the first identifier and an applicable cell range.

22. A communication method, applied to a second network device and comprising:
receiving first request information, wherein the first request information is used to request to register a first model, the first request information comprises a first identifier, the first identifier corresponds to the first model, and the first model is a model trained by a first network device; and
registering the first model based on the first request information.

23. The method according to claim 22, wherein receiving the first request information comprises:
receiving the first request information from the first network device; or
receiving the first request information from a terminal device, wherein the first request information is sent by the terminal device after the terminal device receives indication information from the first network device, and the indication information comprises the first request information.

24. The method according to claim 23, wherein the method further comprises:
sending a registration result of the first model to the first network device based on the first request information from the first network device; or
sending a registration result of the first model to the terminal device based on the first request information from the terminal device.

25. A communication apparatus, comprising a module or a unit configured to perform the method according to any one of claims 1 to 16.

26. A communication apparatus, comprising a module or a unit configured to perform the method according to any one of claims 17 to 21.

27. A communication apparatus, comprising a module or a unit configured to perform the method according to any one of claims 22 to 24.

28. A communication apparatus, wherein the apparatus comprises a processor, the processor is coupled to a memory, the memory stores instructions, and when the instructions are run by the processor, the processor is enabled to perform the method according to any one of claims 1 to 16.

29. A communication apparatus, wherein the apparatus comprises a processor, the processor is coupled to a memory, the memory stores instructions, and when the instructions are run by the processor, the processor is enabled to perform the method according to any one of claims 17 to 21.

30. A communication apparatus, wherein the apparatus comprises a processor, the processor is coupled to a memory, the memory stores instructions, and when the instructions are run by the processor, the processor is enabled to perform the method according to any one of claims 22 to 24.

31. A communication system, comprising a first network device and a second network device, wherein the first network device is configured to perform the method according to any one of claims 1 to 16, and the second network device is configured to perform the method according to any one of claims 22 to 24.

32. A computer-readable storage medium, wherein the computer-readable storage medium is configured to store a computer program, and when the computer program is run on a computer, the computer is enabled to perform the method according to any one of claims 1 to 16, the computer is enabled to perform the method according to any one of claims 17 to 21, or the computer is enabled to perform the method according to any one of claims 22 to 24.
